# EUROPÄISCHE PATENTSCHRIFT

(11) **EP 3 055 653 B1**
(45) Veröffentlichungstag und Bekanntmachung des Hinweises auf die Patenterteilung: **12.06.2019**
(21) Anmeldenummer: 14783830.4
(22) Anmeldetag: 10.10.2014
(51) Int. Cl.: G01D 13/22, B60K 37/02

(54) **ZEIGERINSTRUMENT MIT DOPPEL-ZEIGER UND EXCENTRIERTER BEFESTIGUNGSSÄULE**
POINTER INSTRUMENT HAVING A DOUBLE POINTER AND AN ECCENTRICALLY ARRANGED FASTENING COLUMN
INSTRUMENT À AIGUILLE MUNI D'UNE AIGUILLE DOUBLE ET D'UNE COLONNE DE FIXATION EXCENTRÉE

(30) Priorität: 11.10.2013 DE 102013220510; 10.01.2014 DE 102014200367
(43) Veröffentlichungstag der Anmeldung: 17.08.2016
(73) Patentinhaber: Continental Automotive GmbH, 30165 Hannover (DE)
(72) Erfinder: GRUENIG, Thomas, 78087 Mönchweiler (DE); STIER, Rainer, 78628 Rottweil (DE)
(86) Internationale Anmeldenummer: PCT/EP2014/071803
(87) Internationale Veröffentlichungsnummer: WO 2015/052327

(56) Entgegenhaltungen:
- EP-A1- 1 880 890
- DE-A1- 19 601 270
- FR-A1- 2 850 163
- GB-A- 2 470 202
- JP-A- 2004 219 210
- US-A1- 2007 157 869

## Beschreibung

Gegenstand der Erfindung ist ein Zeigerinstrument, insbesondere in einem Kraftfahrzeug, mit einer zentralen Anzeigeeinheit, welche auf einer Befestigungssäule angeordnet ist, wobei die Befestigungssäule außerhalb des Zentrums der Anzeigeeinheit angeordnet ist, mit einer die Anzeigeeinheit konzentrisch umschließenden Anzeigefläche und mit einem zentrisch gelagerten ersten Zeiger zum sichtbaren Verschwenken über der Anzeigefläche, wobei die Anzeigeeinheit aus Sicht des Betrachters vor dem Zeiger angeordnet ist.

Bei derartigen Zeigerinstrumenten ist die zentrale Anzeigeeinheit ein Display zum Anzeigen unterschiedlichster Informationen, welche mit einer das Display umschließenden Anzeigefläche kombiniert ist. Die ringförmige Anzeigefläche weist eine Skala auf, die von dem Zeiger überstrichen wird. Aufgrund der Befestigungssäule für das Display, welche zum Abstützen und zur Kontaktierung des Displays dient, kann der zentrisch gelagerte Zeiger lediglich über einen Winkelbereich von ungefähr 300° verschwenkt werden. Dadurch lässt sich nicht die gesamte Anzeigefläche für eine zeigerbasierte Informationsdarstellung nutzen.

Aus der gattungsgemäßen GB 2 470 202 A ist ein Zeigerinstrument bekannt bei dem die gesamte Anzeigefläche zur zeigerbasierten Darstellung von Informationen genutzt werden kann, wobei konzentrisch zum ersten Zeiger ein zweiter Zeiger angeordnet ist, der eine Ausnehmung zum Umschließen der Befestigungssäule aufweist.

Mit der Anordnung eines zweiten Zeigers wird es ermöglicht, die Anzeigefläche über einen Winkelbereich von 360° für eine Informationsdarstellung zu nutzen. Erreicht wird dies durch die Ausnehmung des zweiten Zeigers. Auf diese Weise kann die sichtbare Zeigerspitze auch den Winkelbereich abdecken, der aufgrund der Anordnung der Befestigungssäule für das Display mit einer normalen Zeigerausbildung nicht erreichbar wäre. Die Ausnehmung ist dabei der freie Bereich des Zeigers, der sich bezogen auf den Radius auf Höhe des mindestens einen Stegs befindet. Die spezielle Zeigerausbildung mit einer Ausnehmung verursacht einen geringen Aufwand, so dass sich das Zeigerinstrument relativ kostengünstig herstellen lässt.

Aufgabe der Erfindung ist es, dass das Ringsegment auch in dem Winkelbereich bewegt werden kann, in dem sich die Befestigungssäule befindet.

Erfindungsgemäß ist die Ausnehmung von einem Ringsegment gebildet, welches mit einem Steg mit einer Zeigerbuchse verbunden ist. Bei dieser Gestaltung besitzt das Ringsegment einen größeren Abstand vom Zentrum als die Befestigungssäule, wodurch das Ringsegment auch in dem Winkelbereich bewegt werden kann, in dem sich die Befestigungssäule befindet. Über einen Steg ist das Ringsegment mit der Zeigerbuchse zum Antrieb des Zeigers verbunden. Die Ausnehmung erstreckt sich in dieser Ausgestaltung von der einen Seite des Stegs bis zur anderen Seite und damit über nahezu 360°.

In Abhängigkeit von der Materialwahl und der geometrischen Gestaltung bestehen weitere vorteilhafte Ausgestaltungen darin, zusätzlich zu dem einen Steg weitere Stege, vorzugsweise ein bis zwei weitere Stege, vorzusehen. Die Anordnung der Stege dient der Erhöhung der Stabilität des Zeigers. In diesen Ausgestaltungen sind die Ausnehmungen die freien Bereiche, die von zwei Stegen begrenzt werden.

Eine hohe Stabilität des Zeigers wird mit einem Ringsegment erreicht, welches sich über 360° erstreckt. Ein solcher Zeiger ist besonders formstabil.

Die Stabilität eines solchen Zeigers lässt sich noch weiter erhöhen, indem ein bis drei zusätzliche Stege zum ersten Steg vorgesehen sind.

Die Leichtgängigkeit beim Bewegen des Zeigers wird erhöht, indem die Stege auf der der Zeigerspitze abgewandten Hälfte des Ringsegments angeordnet sind. Mit einer derartigen Anordnung lässt sich die Lage des Massenmittelpunktes aktiv beeinflussen und idealerweise in den Bereich der Zeigerbuchse verschieben.

Im Allgemeinen ist eine symmetrische Anordnung der Zeigerspitze am Ringsegment bezüglich der Stege zu bevorzugen. Sofern aus den räumlichen Gegebenheiten von einer symmetrischen Anordnung abgewichen wird, ist die Zeigerspitze so anzuordnen, dass die dadurch erzeugte Unwucht nicht zu groß ist.

Eine infolge einer asymmetrischen Anordnung der Zeigerspitze bedingte Unwucht lässt sich ausgleichen, wenn entsprechende Bereiche des Ringsegments mit anderen Abmessungen gestaltet sind. Im einfachsten Fall besitzen alle Bereiche des Ringelements den gleichen Querschnitt und somit die gleichen Abmessungen. Durch Verstärkung entsprechender Bereiche, vorzugsweise durch einen größeren Querschnitt, insbesondere eines dickeren Stegs, besitzen diese Bereiche eine größere Masse, die wiederum als Ausgleich anordnungsbedingter Unwuchten dient.

Ein geringeres Gewicht des Zeigers, verbunden mit einem geringeren erforderlichen Bauraum wird gemäß einer weiteren Ausgestaltung dadurch erzielt, dass sich das Ringsegment über einen Winkelbereich von 180° erstreckt.

Vorteilhafterweise weist ein derartiger Zeiger zwei Stege zum Verbinden des Ringsegments mit der Zeigerbuchse auf, wobei die Stege jeweils an den Enden des Ringsegments angeordnet sind. Ein solcher Zeiger zeichnet sich durch eine hohe Stabilität aus.

Zur weiteren Verringerung des Gewichts des Zeigers trägt es bei, wenn sich das Ringsegment über einen Winkelbereich von 90° erstreckt. Ein solcher Zeiger ist besonders leichtgängig. Für einen solchen Zeiger ist ein Steg ausreichend. Für hohe Anforderungen an Formstabilität und Festigkeit hat sich die Anordnung von zwei Stegen als vorteilhaft erwiesen.

Eine vergrößerte Ausnehmung bei einem Zeiger mit einem Ringsegment von 90° wird gemäß einer anderen Ausgestaltung dadurch erreicht, dass die Stege nicht radial verlaufend und somit geradlinig, sondern gewölbt ausgebildet sind.

Je nach Einsatzbereich kann sich das Ringsegment in weiteren Ausgestaltungen auch über andere als die oben genannten Winkelbereiche erstrecken.

Zur Erhöhung der Stabilität des Zeigers, insbesondere bei der Verwendung eines Steges, trägt es außerdem bei, wenn der Steg eine von einem Rechteck- oder Rundprofil abweichendes Querschnittsprofil, insbesondere ein L- oder T-Profil, aufweist.

Sofern das Ringsegment aus Sicht des Betrachters verdeckt hinter der Anzeigeeinheit angeordnet ist, ist gewährleistet, dass lediglich die Zeigerspitze vom Betrachter wahrnehmbar ist.

Eine einfache Herstellbarkeit des Zeigers ist gegeben, wenn das Ringsegment mit der Zeigerbuchse einteilig, vorzugsweise aus Metall oder Kunststoff, ausgebildet ist. Während die Ausbildung aus Metall eine besonders stabile Ausgestaltung erlaubt, sind bei einer Ausführung in Kunststoff besonders leichte Zeiger möglich.

Um das Ringsegment mit dem Steg und gegebenenfalls auch die Zeigerbuchse aus Metall herstellen zu können, ist in einer vorteilhaften Ausgestaltung die Zeigerspitze als separates Bauteil ausgebildet, welches mit dem Ringsegment verbunden ist. Dies ermöglicht die Verwendung unterschiedlicher Materialien für die Zeigerspitze und den restlichen Zeiger. Somit lassen sich Zeigerspitze und Restzeiger optimal an ihre jeweiligen Aufgaben anpassen. Das erlaubt die Verwendung von Kunststoff, insbesondere PC (Polycarbonat) oder PMMA (Polymethylmethacrylat), als beleuchtbares Material für die Zeigerspitze, was unabhängig von der Materialauswahl des Restzeigers erfolgen kann.

Ein kurzer Lichtleitpfad zum Beleuchten der Zeigerspitze wird dadurch erreicht, dass die Zeigerspitze im Bereich des Ringsegments eine Einkoppelfläche besitzt, dass gegenüber der Einkoppelfläche eine Auskoppelfläche eines Lichtleitelements angeordnet ist, wobei sich die Auskoppelfläche entlang der Bewegungsbahn der Einkoppelfläche erstreckt und dass das Lichtleitelement mindestens eine Einkoppelfläche für Licht mindestens einer Lichtquelle aufweist, so dass das Licht von der Lichtquelle über das Lichtleitelement zum Beleuchten der Zeigerspitze in diese führbar ist.

An mehreren Ausführungsbeispielen wird die Erfindung näher erläutert. Es zeigen in:
- Fig. 1:: ein erfindungsgemäßes Zeigerinstrument aus Sicht eines Betrachters,
- Fig. 2:: das Zeigerinstrument nach Fig. 1,
- Fig. 3a - e:: weitere Ausführungsformen der Zeiger und
- Fig. 4:: die Rückseite des Zeigerinstruments aus Fig. 1.

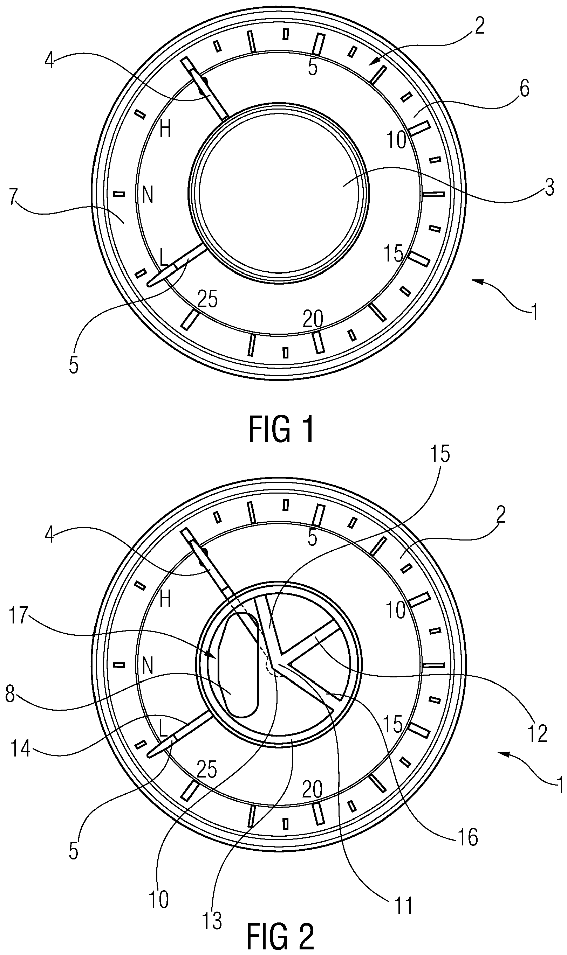

In Fig. 1 zeigt ein Zeigerinstrument 1 für den Einsatz in einem Kraftfahrzeug mit einer ringförmigen Anzeigefläche 2. Im Zentrum der ringförmigen Anzeigefläche 2 ist ein Display 3 als zentrale Anzeigeeinheit angeordnet, so dass die Anzeigefläche 2 das Display 3 konzentrisch umschließt. Ein erster, zentrisch gelagerter Zeiger 4 ist zum sichtbaren Verschwenken über der Anzeigefläche 2 angeordnet, wobei das Display 3 aus Sicht des Betrachters vor dem ersten Zeiger 4 angeordnet ist. Zusätzlich ist ein zweiter Zeiger 5 ebenfalls zentrisch hinter dem Display 3 angeordnet, wobei die Zeigerspitze 6 des zweiten Zeigers 5 analog zum ersten Zeiger zum sichtbaren Verschwenken über der Anzeigefläche 2 ausgebildet ist. Die Anzeigefläche 2 weist zwei Skalen 6, 7 auf. Die erste Skala 6 ist in diesem Beispiel von "0" bis "25" ausgebildet und erstreckt sich über 270° der Anzeigefläche 2. Der erste Zeiger 4 ist so angeordnet, dass er über den Bereich von "0" bis "25" verschwenkbar ist. Die zweite Skala 7 ist von "H" bis "L" ausgebildet und erstreckt sich über nahezu 90° der Anzeigefläche 2. Der zweite Zeiger 5 ist so ausgebildet, dass er über diesen Bereich verschwenkbar ist. Die Anzeigefläche 2 wird somit über ihre gesamte Erstreckung für die Informationsdarstellung genutzt, da beide Zeiger 4, 5 zusammen über einen Winkelbereich von 360° verschwenkbar sind.

Fig. 2 zeigt das Zeigerinstrument 1 mit der kreisringförmigen Anzeigefläche 2 ohne Display 3. Lediglich die Befestigungssäule 8, mit der sich das Display an einem Träger des Anzeigeinstruments 1 abstützt, ist dargestellt. Der erste Zeiger 4 ist geradlinig ausgebildet und mit seiner Zeigerbuchse 10 im Zentrum drehbar gelagert. Der zweite Zeiger 5 besitzt ebenfalls eine Zeigerbuchse 11, die innerhalb der Zeigerbuchse 10 des ersten Zeigers 4 angeordnet ist. Ein Steg 12 verläuft von der Zeigerbuchse 11 radial nach außen bis zu einem Ringsegment 13, welches sich über 360° erstreckt. Auf der dem Steg 12 gegenüberliegenden Seite des Ringsegments 13 ist eine Zeigerspitze 14 befestigt. Infolge dieser Anordnung liegt der Massenmittelpunkt des Zeigers 5 im Bereich der Zeigerbuchse 11. Zur Erhöhung der Stabilität des Zeigers 5 sind symmetrisch zum Steg 12 zwei weiter Stege 15, 16 zu beiden Seiten des ersten Stegs 12 angeordnet. Die beiden Stege 15, 16 bilden mit dem Ringsegment 13 eine Ausnehmung 17, wobei Ringsegment 13 und die beiden Stege 15, 16 derart ausgebildet sind, dass beim Verschwenken des zweiten Zeigers 5 über die zweite Skala 7 die Befestigungssäule 8 des Displays nicht berührt wird. Der erste Zeiger 4 wird ebenfalls im Uhrzeigersinn verschwenkt, so dass mit dieser Gestaltung ein Winkelbereich von 360° der Anzeigefläche 2 von den Zeigern abgedeckt wird.

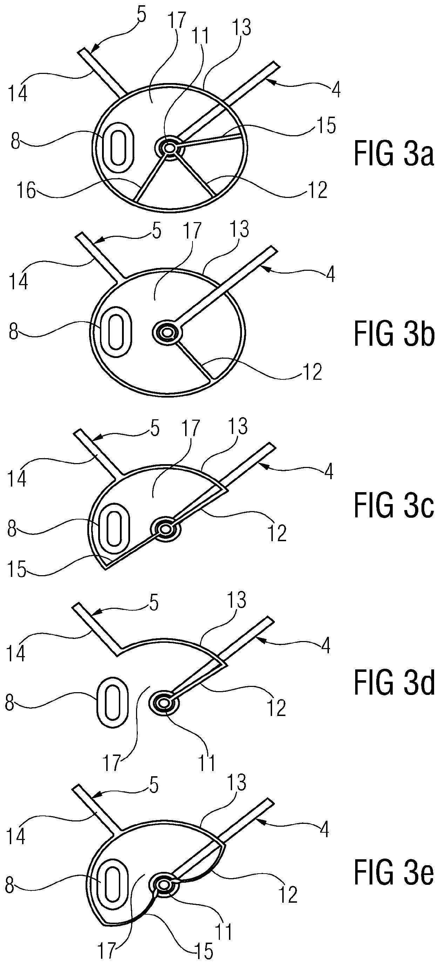

Die Figuren 3a - e zeigen die beiden Zeiger 4, 5 und die Befestigungssäule 8. In der gezeigten Darstellung steht der erste Zeiger 4 auf der nicht dargestellten Anzeigefläche 2 zwischen "5" und "10", während der zweite Zeiger 5 auf "H" steht. Der zweite Zeiger 5 besteht in allen Darstellungen aus der Zeigerbuchse 11 mit dem ersten Steg 12, der wiederum mit dem Ringsegment 13 und der daran befestigten Zeigerspitze 14 verbunden ist. Der Zeiger 5 in Fig. 3a entspricht dabei dem Zeiger 5 in Figur 2.

Der Zeiger 5 in Fig. 3b besitzt lediglich einen Steg 12. Eine ausreichende Stabilität eines solchen besonders einfach gebauten Zeigers lässt sich beispielsweise durch entsprechende geometrische Gestaltung hinsichtlich Dicke und Querschnitt oder die Materialwahl, vorzugsweise Metall, erzielen. In dieser Ausgestaltung besitzt die Ausnehmung 17 ihre größte Erstreckung, was einen Schwenkbereich des zweiten Zeigers 5 in Abhängigkeit von der Größe der Befestigungssäule 8 von nahezu 270° ermöglicht. Dadurch lässt sich die dem zweiten Zeiger 5 zugeordneten Skala über einen wesentlich größeren Winkelbereich ausbilden, was die Ablesbarkeit verbessert und/oder eine feinere Unterteilung der Skala ermöglicht.

In der Fig. 3c erstreckt sich das Ringsegment 13 über einen Winkelbereich von 180°. Die beiden Enden des Ringsegments 13 sind über jeweils einen Steg 12, 15 mit der Zeigerbuchse 11 verbunden. Die Zeigerspitze 14 ist in dieser Ausführung 90° versetzt zum Steg 12 am Ringsegment 13 befestigt. Die Ausnehmung 17 wird vom Ringsegment 13 und den Stegen 12, 15 umschlossen.

Das Ringsegment 13 in Fig. 3d erstreckt sich über 90° und ist an einem Ende über den Steg 12 mit der Zeigerbuchse 11 verbunden. Am anderen Ende des Ringsegments 13 ist die Zeigerspitze 14 befestigt. Steg 12 und Ringsegment 13 bilden somit eine offene Ausnehmung 17. Die offene Ausnehmung 17 erlaubt somit ein Verschwenken des Zeigers 5 über einen Winkelbereich, der größer als der Winkelbereich des Ringsegments 13 ist.

Der Zeiger 5 in Fig. 3e ist eine Abwandlung nach Fig. 3c, bei der die Stege 12, 15 nach außen gewölbt sind. Infolge der Wölbung wird die Ausnehmung 17 vergrößert, was einen größeren Schwenkbereich des Zeigers 5 ermöglicht.

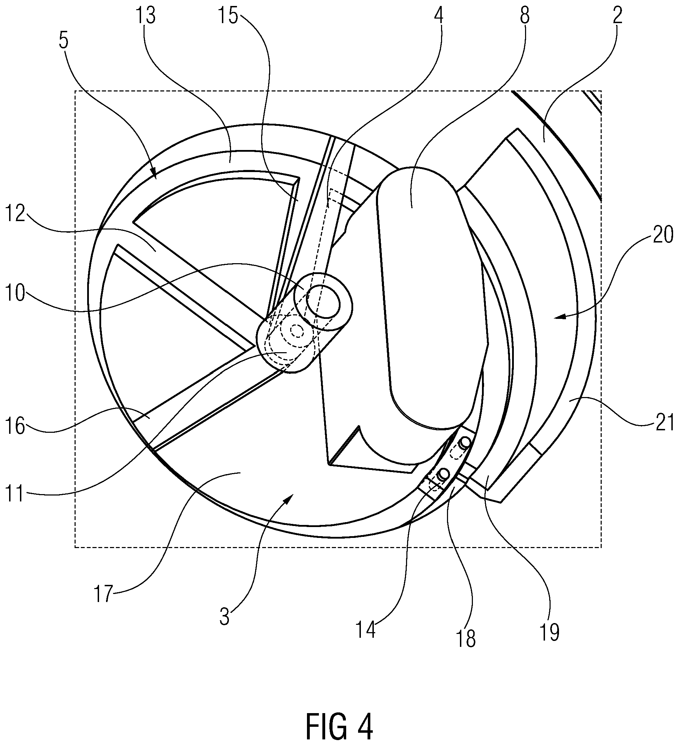

Fig. 4 zeigt die Rückseite der Anzeigefläche 2, das Display 3 mit seiner Befestigungssäule 8 und die davor angeordneten Zeiger 4, 5, wobei die Befestigungssäule 8 durch die Ausnehmung 17 des Zeigers 5 hindurchgeführt ist. Die Ausnehmung 17 wird von den Stegen 15, 16 und dem Ringsegment 13 gebildet. Auf der dem Steg 12 gegenüberliegenden Seite des Ringsegments 13 ist die Zeigerspitze 14 direkt mit dem Ringsegment 13 verbunden. In diesem Bereich besitzt die Zeigerspitze 14 eine Einkoppelfläche 18 für Licht. Gegenüber der Einkoppelfläche 18 ist eine Auskoppelfläche 19 eines Lichtleitelements 20 angeordnet. Das Lichtleitelement 20 erstreckt sich mit seiner Auskoppelfläche 19 entlang der Bewegungsbahn der Einkoppelfläche 18 der Zeigerspitze 14. Das Lichtleitelement 20 besitzt weiter eine Einkoppelfläche 21 für Licht mindestens einer nicht dargestellten Lichtquelle, so dass das Licht von der Lichtquelle über das Lichtleitelement 20 zum Beleuchten der Zeigerspitze 14 in diese führbar ist.

## Patentansprüche

1. Zeigerinstrument(1), insbesondere in einem Kraftfahrzeug, mit einer zentralen Anzeigeeinheit (3), welche auf einer Befestigungssäule angeordnet ist, wobei die Befestigungssäule(8) außerhalb des Zentrums der Anzeigeeinheit(3) angeordnet ist, mit einer die Anzeigeeinheit (3) konzentrisch umschließenden Anzeigefläche(2) und mit einem zentrisch gelagerten ersten Zeiger (4) zum sichtbaren Verschwenken über der Anzeigefläche (2), wobei die Anzeigeeinheit (3) aus Sicht des Betrachters vor dem ersten Zeiger (4) angeordnet ist, wobei konzentrisch zum ersten Zeiger (4) ein zweiter Zeiger (5) angeordnet ist, der eine Ausnehmung (17) zum Umschließen der Befestigungssäule (8) aufweist,
**dadurch gekennzeichnet, dass** die Ausnehmung (17) von einem Ringsegment (13) gebildet ist, das mit mindestens einem Steg (12), vorzugsweise zwei bis drei Stegen (15, 16), mit einer Zeigerbuchse (11) verbunden ist.

2. Zeigerinstrument nach Anspruch 1, **dadurch gekennzeichnet, dass** sich das Ringsegment (13) über 360° erstreckt.

3. Zeigerinstrument nach Anspruch 1, **dadurch gekennzeichnet, dass** sich das Ringsegment (13) über 180° erstreckt.

4. Zeigerinstrument nach Anspruch 1, **dadurch gekennzeichnet, dass** sich das Ringsegment (13) über 90° erstreckt.

5. Zeigerinstrument nach zumindest einem der vorhergehenden Ansprüche, **dadurch gekennzeichnet, dass** das Ringsegment (13) aus Sicht des Betrachters verdeckt hinter der Anzeigeeinheit (3) angeordnet ist.

6. Zeigerinstrument nach zumindest einem der vorhergehenden Ansprüche, **dadurch gekennzeichnet, dass** das Ringsegment (13) mit der Zeigerbuchse (11) einteilig, vorzugsweise aus Metall oder Kunststoff, ausgebildet ist.

7. Zeigerinstrument nach einem der Ansprüche 1 bis 5, **dadurch gekennzeichnet, dass** die Zeigerspitze (14) mit dem Ringsegment (13) verbunden ist.

8. Zeigerinstrument nach Anspruch 7, **dadurch gekennzeichnet, dass** die Zeigerspitze (14) aus einem lichtleitenden Material, vorzugsweise einem Kunststoff, insbesondere PC oder PMMA, besteht.

9. Zeigerinstrument nach Anspruch 8, **dadurch gekennzeichnet, dass** die Zeigerspitze (14) an der dem Ringsegment (13) zugewandten Seite eine Einkoppelfläche (18) besitzt, dass gegenüber der Einkoppelfläche (18) eine Auskoppelfläche (19) eines Lichtleitelements (20) angeordnet ist, wobei sich die Auskoppelfläche (19) entlang der Bewegungsbahn der Einkoppelfläche (18) erstreckt und dass das Lichtleitelement (20) mindestens eine Einkoppelfläche (21) für Licht mindestens einer Lichtquelle aufweist, so dass das Licht von der Lichtquelle über das Lichtleitelement (20) zum Beleuchten der Zeigerspitze (14) in diese führbar ist.

## Claims

1. Pointer instrument, in particular in a motor vehicle, with a central indicating unit (3), which is arranged on a fastening column, wherein the fastening column (8) is arranged outside of the center of the indicating unit (3), with an indicating surface (2) concentrically surrounding the indicating unit (3), and with a centrally supported first pointer (4) for visibly pivoting over the indicating surface (2), wherein the indicating unit (3) is arranged in front of the first pointer (4) from the viewpoint of the observer, wherein a second pointer (5), which has a recess (17) for surrounding the fastening column (8), is arranged concentrically with respect to the first pointer (4), **characterized in that** the recess (17) is formed by a ring segment (13) which is connected to a pointer bushing (11) by at least one web (12), preferably two to three webs (15, 16).

2. Pointer instrument according to Claim 1, **characterized in that** the ring segment (13) extends through 360°.

3. Pointer instrument according to Claim 1, **characterized in that** the ring segment (13) extends through 180°.

4. Pointer instrument according to Claim 1, **characterized in that** the ring segment (13) extends through 90°.

5. Pointer instrument according to at least one of the preceding claims, **characterized in that** the ring segment (13) is arranged hidden behind the indicating unit (3) from the viewpoint of the observer.

6. Pointer instrument according to at least one of the preceding claims, **characterized in that** the ring segment (13) is formed in one piece with the pointer bushing (11), preferably from metal or plastic.

7. Pointer instrument according to one of Claims 1 through 5, **characterized in that** the pointer tip (14) is connected to the ring segment (13).

8. Pointer instrument according to Claim 7, **characterized in that** the pointer tip (14) is made from a light-guiding material, preferably a plastic, in particular PC or PMMA.

9. Pointer instrument according to Claim 8, **characterized in that** the pointer tip (14), on the side directed toward the ring segment (13), has a coupling-in surface (18), **in that** a coupling-out surface (19) of a light-guiding element (20) is arranged opposite the coupling-in surface (18), wherein the coupling-out surface (19) extends along the trajectory of the coupling-in surface (18), and **in that** the light-guiding element (20) has at least one coupling-in surface (21) for light from at least one light source, such that the light from the light source can be guided by the light-guiding element (20) into the pointer tip (14) in order to illuminate the latter.

## Revendications

1. Instrument à aiguille (1), notamment dans un véhicule automobile, comprenant une unité d'affichage (3) centrale qui est disposée sur une colonne de fixation, la colonne de fixation (8) étant disposée en-dehors du centre de l'unité d'affichage (3), comprenant une surface d'affichage (2) qui entoure l'unité d'affichage (3) de manière concentrique et comprenant une première aiguille (4) montée centrée pour un pivotement visible sur la surface d'affichage (2), l'unité d'affichage (3) étant disposée devant la première aiguille (4) du point de vue de l'observateur, une deuxième aiguille (5) étant disposée de manière concentrique par rapport à la première aiguille (4), laquelle possède un évidement (17) servant à entourer la colonne de fixation (8),
**caractérisé en ce que** l'évidement (17) est formé par un segment d'anneau (13) qui est relié à une douille d'aiguille (11) par au moins un élément jointif (12), de préférence deux à trois éléments jointifs (15, 16).

2. Instrument à aiguille selon la revendication 1, **caractérisé en ce que** le segment d'anneau (13) s'étend sur 360°.

3. Instrument à aiguille selon la revendication 1, **caractérisé en ce que** le segment d'anneau (13) s'étend sur 180°.

4. Instrument à aiguille selon la revendication 1, **caractérisé en ce que** le segment d'anneau (13) s'étend sur 90°.

5. Instrument à aiguille selon au moins l'une des revendications précédentes, **caractérisé en ce que** le segment d'anneau (13), du point de vue de l'observateur, est disposé masqué derrière l'unité d'affichage (3).

6. Instrument à aiguille selon au moins l'une des revendications précédentes, **caractérisé en ce que** le segment d'anneau (13) est réalisé d'un seul tenant avec la douille d'aiguille (11), de préférence en métal ou en matière plastique.

7. Instrument à aiguille selon au moins l'une des revendications 1 à 5, **caractérisé en ce que** la pointe d'aiguille (14) est reliée au segment d'anneau (13).

8. Instrument à aiguille selon la revendication 7, **caractérisé en ce que** la pointe d'aiguille (14) se compose d'un matériau conducteur de lumière, de préférence une matière plastique, notamment du PC ou du PMMA.

9. Instrument à aiguille selon la revendication 8, **caractérisé en ce que** la pointe d'aiguille (14) possède une surface d'injection (18) au niveau du côté qui fait face au segment d'anneau (13), **en ce qu'**une surface de sortie (19) d'un élément de guidage de lumière (20) est disposée à l'opposé de la surface d'injection (18), la surface de sortie (19) s'étendant le long de la trajectoire de mouvement de la surface d'injection (18), et **en ce que** l'élément de guidage de lumière (20) possède au moins une surface d'injection (21) pour la lumière d'au moins une source de lumière, de sorte que la lumière de la source de lumière peut être guidée dans l'élément de guidage de lumière (20) en vue d'éclairer la pointe d'aiguille (14) par le biais de celui-ci.
